# EUROPEAN PATENT SPECIFICATION

(11) **EP 3 451 161 B1**
(45) Date of publication and mention of the grant of the patent: **20.04.2022**
(21) Application number: 16899930.8
(22) Date of filing: 13.05.2016
(51) Int. Cl.: G06F 9/30

(54) **APPARATUS AND METHOD FOR EXECUTING OPERATIONS OF MAXIMUM VALUE AND MINIMUM VALUE OF VECTORS**
VORRICHTUNG UND VERFAHREN ZUR AUSFÜHRUNG VON HÖCHST- UND MINDESTWERTOPERATIONEN VON VEKTOREN
APPAREIL ET PROCÉDÉ PERMETTANT D'EXÉCUTER DES OPÉRATIONS D'UNE VALEUR MAXIMALE ET D'UNE VALEUR MINIMALE DE VECTEURS

(30) Priority: 26.04.2016 CN 201610266872
(43) Date of publication of application: 06.03.2019
(73) Proprietor: Cambricon Technologies Corporation Limited, Beijing 100190 (CN)
(72) Inventor: ZHI, Tian, Beijing 100190 (CN); LIU, Shaoli, Beijing 100190 (CN); GUO, Qi, Beijing 100190 (CN); CHEN, Tianshi, Beijing 100190 (CN); CHEN, Yunji, Beijing 100190 (CN)
(74) Representative: AWA Sweden AB
(86) International application number: PCT/CN2016/082016
(87) International publication number: WO 2017/185419

(56) References cited:
- EP-A1- 1 936 492
- WO-A1-2015/073915
- CN-A- 101 114 215
- CN-A- 101 685 388
- CN-A- 102 103 643
- CN-A- 104 731 558
- GB-A- 2 382 887
- US-A1- 2011 138 155

## Description

### TECHNICAL FIELD

The disclosure relates to a vector maximum-minimum operation device and method for performing a vector maximum-minimum operation according to a vector maximum-minimum operation instruction, to determine a maximum element and a minimum element of a vector.

### BACKGROUND

In the current computer field, more and more algorithms are now involving vector operations. Taking machine learning algorithms (i.e., mainstream algorithms of artificial intelligence in popular application fields) as an example, almost all existing classical algorithms of the machine learning algorithms need to perform vector maximum-minimum operations (i.e., operations for obtaining a maximum element and/or a minimum element of a vector). For a maximum value of an input vector, *max_out←max* (*Vector_in*[*i*] [*v_size*])*,* where *Vector_in*[*i*] refers to a start address of the input vector, *v_size* refers to a length of the input vector, and *max_out* refers to a register holding the maximum value. Similarly, for a minimum value of an input vector, *min_out←min* (*Vector_in*[*i*] *[v_size]),* where *Vector-in*[*i*] refers to a start address of the input vector, *v_size* refers to a length of the input vector, and *min_out* refers to a register holding the minimum value. It should be noted that, each operation field of an instruction can only correspond to a register.

In the related art, one solution to conduct a vector maximum-minimum operation is to use general-purpose processors by executing general instructions via general-purpose register files and general-purpose functional units to perform a vector maximum-minimum operation. However, one defect of the solution is the low operation performance during a vector maximum-minimum operation because a single general-purpose processor is primarily used for scalar calculations. On the other hand, adopting multiple general-purpose processors for concurrent execution may lead to a possible performance bottleneck resulting from the intercommunication among the multiple general-purpose processors. In another related art, a vector calculation is conducted by adopting a graphics processing unit (GPU), where general-purpose register files and general-purpose stream processing units are configured to execute general single instruction multiple data (SIMD) instructions, thereby performing a vector maximum-minimum operation. Nonetheless, in the above-mentioned solution, GPU's on-chip small cache in performing largescale vector maximum-minimum operations requires a constant transportation of off-chip data, which makes off-chip bandwidth a main performance bottleneck. In another related art, a specialized vector maximum-minimum operation device is adopted to perform vector calculations, where customized register files and processing units are used to perform a vector maximum-minimum operation. Limited by the register files, however, the present specialized vector maximum-minimum operation device is unable to flexibly support maximum-minimum operations of vectors of different lengths. GB 2382887 A relates to a processor for executing scalar and vector instructions.

### SUMMARY

### (1) Technical problems to be solved

The disclosure aims to provide a vector maximum-minimum operation device and method to solve the problems existing in the related art, such as limited inter-chip communication, insufficient on-chip cache, and inflexible support for different vector lengths.

### (2)Technical solutions

The disclosure provides a vector maximum-minimum operation device, which is configured to determine a maximum element and a minimum element of a vector according to a vector maximum-minimum operation instruction. The device includes a storage unit, a register unit, and a vector maximum-minimum operation unit.

The storage unit is configured to store vectors.

The register unit is configured to store vector addresses, where the vector addresses are addresses of the vectors stored in the storage unit.

The vector maximum-minimum operation unit is configured to acquire the vector maximum-minimum operation instruction, to acquire a vector address from the register unit according to the vector maximum-minimum operation instruction, to acquire the vector from the storage unit according to the vector address acquired, and to perform a vector maximum-minimum operation on the vector acquired to obtain the maximum element and the minimum element of the vector.

The disclosure further provides a vector maximum-minimum operation method, which is configured to determine a maximum element and a minimum element of a vector according to a vector maximum-minimum operation instruction. The method includes the following operations.

At S1, vectors are stored.

At S2, vector addresses are stored.

At S3, the vector maximum-minimum operation instruction is acquired, a vector address is acquired according to the vector maximum-minimum operation instruction, the vector is acquired according to the vector address acquired, and a vector maximum-minimum operation is performed on the vector acquired, to obtain the maximum element and the minimum element of the vector.

### (3)Advantageous effects

According to the vector maximum-minimum operation device and method of the disclosure, vector data involved in calculation can be temporarily stored into a scratchpad memory. In the case of only transmitting a same instruction, data of different widths can be supported more flexibly and effectively in the vector maximum-minimum operation unit, and correlation problems in data storing can be solved, therefore an execution performance of a task including a large number of vector calculations can be improved. In addition, an instruction set adopted by the disclosure is convenient to use and flexible in supporting vectors of different lengths.

The disclosure can be applied to the following (including but not limited to) scenarios: a data processing device, a robot, a computer, a printer, a scanner, a telephone, a tablet, a smart terminal, a mobile phone, a driving recorder, a navigator, a sensor, a webcam, a cloud server, a camera, a video camera, a projector, a watch, headphones, a mobile storage, a wearable device, and other electronic products; an airplane, a ship, a car, and other vehicles; a television (TV), an air conditioner, a microwave oven, a refrigerator, an electric cooker, a humidifier, a washing machine, an electric lamp, a gas stove, a hood, and other home appliances; a nuclear magnetic resonance spectrometer, a B-ultrasonic, an electrocardiograph, and other medical equipment.

### BRIEF DESCRIPTION OF THE DRAWINGS

FIG. 1 is a schematic structural diagram illustrating a vector maximum-minimum operation device according to an embodiment of the present disclosure.
FIG. 2 is a schematic diagram of the format of an instruction set according to an embodiment of the present disclosure.
FIG. 3 is a schematic structural diagram illustrating a vector maximum-minimum operation device according to an embodiment of the present disclosure.
FIG. 4 is a schematic flow diagram illustrating a method for performing a vector maximum-minimum operation instruction through a vector maximum-minimum operation device according to an embodiment of the present disclosure.

### DETAILED DESCRIPTION

The disclosure provides a vector maximum-minimum operation device and a corresponding instruction set. The device includes a storage unit, a register unit, and a vector maximum-minimum operation unit. The storage unit is configured to store vectors. The register unit is configured to store addresses of the vectors stored. The vector maximum-minimum operation unit is configured to acquire a vector address from the register unit according to a vector maximum-minimum operation instruction, to acquire a vector from the storage unit according to the vector address acquired, and to perform a vector maximum-minimum operation on the vector acquired to obtain the vector maximum-minimum operation result. According to the disclosure, vector data involved in calculation can be temporarily stored into a scratchpad memory, so that data of different widths can be supported more flexibly and effectively in a vector maximum-minimum operation process, and it is possible to improve an execution performance of a task including a large number of vector calculations.

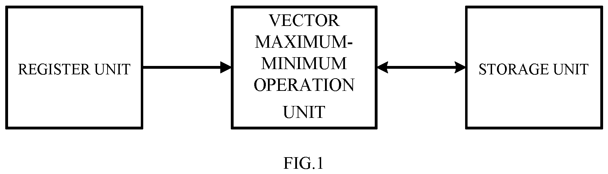

FIG. 1 is a schematic structural diagram illustrating a vector maximum-minimum operation device according to an embodiment of the present disclosure. As illustrated in FIG. 1, the device includes a storage unit, a register unit, and a vector maximum-minimum operation unit.

The storage unit is configured to store vectors. In one implementation, the storage unit can be a scratchpad memory capable of supporting vector data of different sizes. According to the disclosure, calculation data required can be temporarily stored into a scratchpad memory, to enable the operation device to more flexibly and effectively support data of different widths during vector maximum-minimum operations. It may be understood that, the storage unit includes, but is not limited to, a variety of different memory devices, such as a static random access memory (SRAM), an enhanced dynamic random access memory (eDRAM), a dynamic random access memory (DRAM), a memristor, a 3D-DRAM, a non-transitory memory, or the like.

The register unit is configured to store vector addresses, where the vector addresses are addresses of the vectors stored in the storage unit. In one implementation, the register unit can be a scalar register file, to provide scalar registers required for an operation. It should be noted that, the scalar register is configured to store not only vector addresses but also scalar data. When an operation of a vector and a scalar is performed, the vector maximum-minimum operation unit acquires not only a vector address but also a corresponding scalar from the register unit.

The vector maximum-minimum operation unit is configured to acquire a vector maximum-minimum operation instruction, to acquire a vector address from the register unit according to the vector maximum-minimum operation instruction, to acquire a vector from the storage unit according to the vector address acquired, to perform a vector maximum-minimum operation on the vector acquired to obtain a maximum element and a minimum element of the vector, and to store a result of the vector maximum-minimum operation into the storage unit.

It should be noted that, the maximum element and the minimum element of the vector can be determined by algorithms such as a bubble sorting algorithm, which are all known algorithms, and it will not be repeated here.

According to one implementation of the disclosure, the vector maximum-minimum operation device further includes an instruction cache unit. The instruction cache unit is configured to store vector maximum-minimum operation instructions to be executed. It should be understood that, one instruction (for example, a vector maximum-minimum operation instruction) will be cached in the instruction cache unit while being executed. When execution of an instruction is completed, if the instruction is also the earliest one among instructions that have not been submitted and are in the instruction cache unit, the instruction will be submitted. Once the instruction above is submitted, status change of the device (i.e., the vector maximum-minimum operation device) caused by operations performed by the instruction cannot be cancelled. In an implementation, the instruction cache unit can be a reordering cache.

According to one implementation of the disclosure, the vector maximum-minimum operation device further includes an instruction processing unit. The instruction processing unit is configured to acquire a vector maximum-minimum operation instruction from the instruction cache unit, to process the vector maximum-minimum operation instruction acquired, and to provide the vector maximum-minimum operation instruction processed for the vector maximum-minimum operation unit. In an implementation, the instruction processing unit includes an instruction fetching module, a decoding module, and an instruction queue.

The instruction fetching module is configured to acquire the vector maximum-minimum operation instruction from the instruction cache unit.

The decoding module is configured to decode the vector maximum-minimum operation instruction acquired from the instruction cache unit.

The instruction queue is configured to sequentially store the vector maximum-minimum operation instruction decoded, and, considering that different instructions may have dependency relationships on registers included, to cache the vector maximum-minimum operation instruction decoded and then to send the vector maximum-minimum operation instruction cached when a dependency relationship is eliminated.

According to one implementation of the disclosure, the vector maximum-minimum operation device further includes a dependency relationship processing unit. The dependency relationship processing unit is configured to: determine whether the vector maximum-minimum operation instruction accesses the same vector as a previous vector maximum-minimum operation instruction (in other words, determine whether the vector maximum-minimum operation instruction and a previous vector maximum-minimum operation instruction access a same vector), before the vector maximum-minimum operation unit acquires the vector maximum-minimum operation instruction; and store the vector maximum-minimum operation instruction into a storage queue based on a determination that the vector maximum-minimum operation instruction accesses the same vector as the previous vector maximum-minimum operation instruction, and provide the vector maximum-minimum operation instruction in the storage queue for the vector maximum-minimum operation unit after execution of the previous vector maximum-minimum operation instruction is completed; or provide the vector maximum-minimum operation instruction for the vector maximum-minimum operation unit directly, based on a determination that the vector maximum-minimum operation instruction does not access the same vector as the previous vector maximum-minimum operation instruction. As an example, when the vector maximum-minimum operation instruction (i.e., a current vector maximum-minimum operation instruction) accesses a scratchpad memory, the previous vector maximum-minimum operation instruction and the vector maximum-minimum operation instruction may access a same memory space. In order to ensure the correctness of an execution result of the vector maximum-minimum operation instruction, if data of the current vector maximum-minimum operation instruction is detected to have a dependency relationship with data of the previous vector maximum-minimum operation instruction, the vector maximum-minimum operation instruction must wait within the storage queue until the dependency relationship is eliminated.

According to one implementation of the disclosure, the vector maximum-minimum operation device further includes an input/output (I/O) unit. The I/O unit is configured to store the vectors into the storage unit, or to acquire the maximum element and the minimum element of the vector from the storage unit. In an implementation, the I/O unit can be a direct storage unit and responsible for reading data from a memory or writing data into the memory.

The disclosure further provides a vector maximum-minimum operation method, which is configured to determine a maximum element and a minimum element of a vector according to a vector maximum-minimum operation instruction. The method includes the following operations.

At S1, vectors are stored.

At S2, vector addresses (i.e., addresses of the vectors stored) are stored.

At S3, the vector maximum-minimum operation instruction is acquired, a vector address is acquired according to the vector maximum-minimum operation instruction, the vector is acquired according to the vector address acquired, and a vector maximum-minimum operation is performed on the vector acquired to obtain the maximum element and the minimum element of the vector.

According to one implementation of the disclosure, the method further includes the follows prior to the operation S3.

Vector maximum-minimum operation instructions are stored.

A vector maximum-minimum operation instruction is acquired from the vector maximum-minimum operation instructions stored.

The vector maximum-minimum operation instruction acquired is decoded.

The vector maximum-minimum operation instruction decoded is sequentially stored.

According to one implementation of the disclosure, the method further includes the follows prior to the operation S3.

Whether the vector maximum-minimum operation instruction accesses the same vector as a previous vector maximum-minimum operation instruction is determined (in other words, whether the vector maximum-minimum operation instruction and a previous vector maximum-minimum operation instruction access a same vector is determined). When the vector maximum-minimum operation instruction accesses the same vector as the previous vector maximum-minimum operation instruction, store the vector maximum-minimum operation instruction into a storage queue, and advance to the operation S3 after execution of the previous vector maximum-minimum operation instruction is completed; otherwise, advance to the operation S3 directly.

According to one implementation of the disclosure, the method further includes an operation of storing the determined maximum element and the determined minimum element of the vector.

According to one implementation of the disclosure, the operation S1 includes an operation of storing the vectors into a scratchpad memory.

According to one implementation of the disclosure, the vector maximum-minimum operation instruction includes an operation code and at least one operation field, where the operation code is configured to indicate a function of the vector maximum-minimum operation instruction, and the operation field is configured to indicate data information of the vector maximum-minimum operation instruction.

According to one implementation of the disclosure, the instruction set of the vector maximum-minimum operation device adopts fixed length instructions.

In the process of performing a vector maximum-minimum operation, the vector maximum-minimum operation device fetches a vector maximum-minimum operation instruction for decoding, and then sends the vector maximum-minimum operation instruction decoded to the instruction queue for storing. The vector maximum-minimum operation device acquires parameters of the vector maximum-minimum operation instruction stored according to a decoding result. In an implementation, the parameters can be parameters which are directly written in an operation field of the vector maximum-minimum operation instruction, or can be parameters which are read from a specified register according to a register number of the operation field of the vector maximum-minimum operation instruction. One advantage of using a register to store the parameters is that there is no need to change the vector maximum-minimum operation instruction itself. As long as values of the register are changed by the vector maximum-minimum operation instruction, most of loops can be realized, which greatly saves the number of instructions required to solve some practical problems. After all the parameters for operating are acquired, whether the vector maximum-minimum operation instruction is immediately sent to the vector maximum-minimum operation unit can be determined according to a result determined by the dependency relationship processing unit (i.e., "data required by the vector maximum-minimum operation instruction has a dependency relationship with data required by the previous vector maximum-minimum operation instruction" or "data required by the vector maximum-minimum operation instruction does not have a dependency relationship with data required by the previous vector maximum-minimum operation instruction"). Once a dependency relationship is found between data of the vector maximum-minimum operation instruction and data of the previous vector maximum-minimum operation instruction, the vector maximum-minimum operation instruction must wait until execution of the depended previous vector maximum-minimum operation instruction is completed, and then the vector maximum-minimum operation instruction can be sent to the vector maximum-minimum operation unit for execution. In a specialized operation unit, the vector maximum-minimum operation instruction will be executed quickly, and a result (i.e., a result of a vector maximum-minimum operation) is written back to an address provided by the vector maximum-minimum operation instruction. In this situation, the execution of the vector maximum-minimum operation instruction is completed.

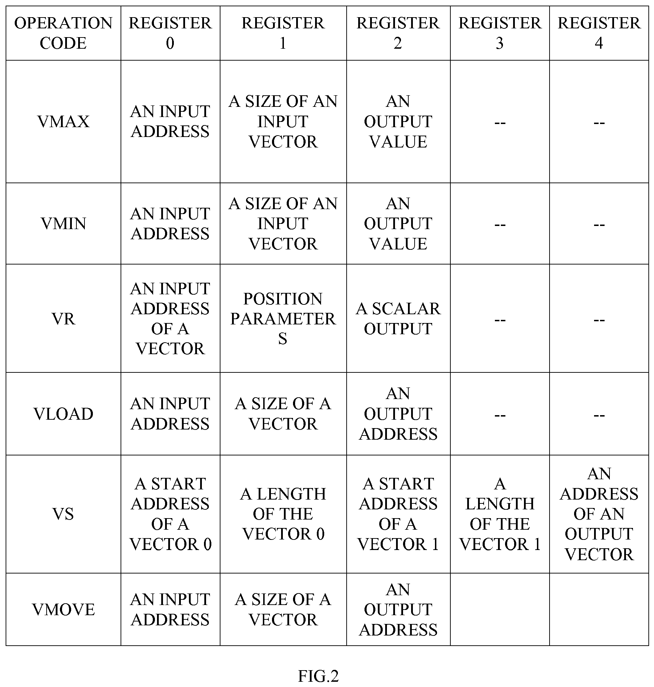

FIG. 2 is a schematic diagram of the format of an instruction set according to an embodiment of the present disclosure. As illustrated in FIG. 2, a vector maximum-minimum operation instruction includes an operation code and at least one operation field. The operation code is configured to indicate a function of the vector maximum-minimum operation instruction, and a vector maximum-minimum operation unit can perform a vector maximum-minimum operation by identifying the operation code. The operation field is configured to indicate data information of the vector maximum-minimum operation instruction, where the data information can be immediate data or a register number (in other words, a register unit number). For example, to acquire a vector, a start address and a length of the vector can be obtained from a register according to a register number, and then the vector stored in a corresponding address can be obtained from the storage unit according to the start address and the length of the vector.

The instruction set contains vector maximum-minimum operation instructions different in functions. The vector maximum-minimum operation instruction includes, but is not limited to, a vector maximum (VMAX) instruction, a vector minimum (VMIN) instruction, a vector retrieval (VR) instruction, a vector load (VLOAD) instruction, a vector storage (VS) instruction, and a vector movement (VMOVE) instruction.

For the vector maximum (VMAX) instruction, a device is configured to retrieve vector data of a specified size from a specified address of a scratchpad memory. Then a maximum element of a vector is selected as a result. Finally, the result is written back into a specified address of a scalar register file.

For the vector minimum (VMIN) instruction, a device is configured to retrieve vector data of a specified size from a specified address of a scratchpad memory. Then a minimum element of a vector is selected as a result. Finally, the result is written back into a specified address of a scalar register file.

For the vector retrieval (VR) instruction, a device is configured to retrieve vector data of a specified size from a specified address of a scratchpad memory. Then, in a vector calculation unit, an element of a vector is extracted according to a specified position to serve as an output. Finally, a result is written back into a specified address of a scalar register file.

For the vector load (VLOAD) instruction, a device is configured to load vector data of a specified size from a specified external source address to a specified address of a scratchpad memory.

For the vector storage (VS) instruction, a device is configured to store vector data of a specified size from a specified address of a scratchpad memory into an external destination address.

For the vector movement (VMOVE) instruction, a device is configured to store (in other words, move) vector data of a specified size from a specified address of a scratchpad memory into another specified address of the scratchpad memory.

To illustrate objects, technical solutions, and advantageous effects of the disclosure more clearly, the disclosure will be further described in detail below with reference to specific embodiments of the disclosure and accompanying drawings.

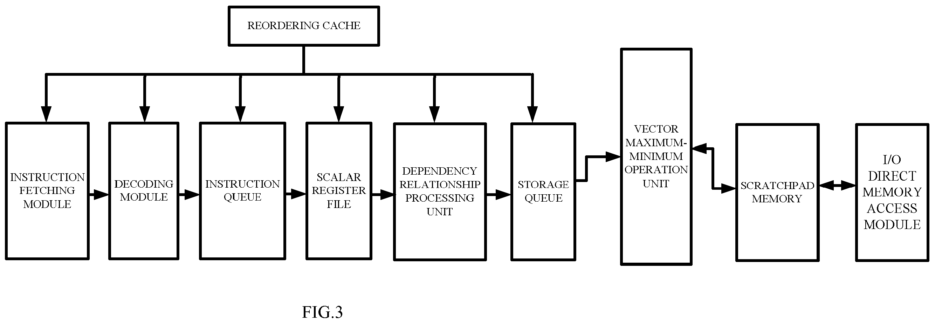

FIG. 3 is a schematic structural diagram illustrating a vector maximum-minimum operation device according to an embodiment of the present disclosure. As illustrated in FIG. 3, the vector maximum-minimum operation device includes an instruction fetching module, a decoding module, an instruction queue, a scalar register file, a dependency relationship processing unit, a storage queue, a reordering cache, a vector maximum-minimum operation unit, a scratchpad memory, and an input/output (I/O) direct memory access module.

The instruction fetching module is configured to fetch a next vector maximum-minimum operation instruction to be executed from an instruction sequence, and to transmit the vector maximum-minimum operation instruction fetched to the decoding module.

The decoding module is configured to decode the vector maximum-minimum operation instruction transmitted, and to transmit the vector maximum-minimum operation instruction decoded to the instruction queue.

Considering that different instructions may have dependency relationships on scalar registers included, the instruction queue is configured to cache the vector maximum-minimum operation instruction decoded, and to transmit the vector maximum-minimum operation instruction cached when a dependency relationship is eliminated.

The scalar register file is configured to provide scalar registers required by the vector maximum-minimum operation device during an operation.

For the dependency relationship processing unit, a vector maximum-minimum operation instruction (also known as a current instruction) processed by the dependency relationship processing unit may have a dependency relationship with a previous vector maximum-minimum operation instruction (also known as a previous instruction). When the vector maximum-minimum operation instruction accesses a scratchpad memory, the previous vector maximum-minimum operation instruction and the vector maximum-minimum operation instruction may access a same memory space. In order to ensure the correctness of an execution result of the instruction, if data of the current instruction is detected to have a dependency relationship with data of the previous instruction, the current instruction must wait within the storage queue until the dependency relationship is eliminated.

The storage queue is a sequential queue, when the data of the vector maximum-minimum operation instruction has a dependency relationship with the data of the previous vector maximum-minimum operation instruction, the vector maximum-minimum operation instruction will be stored in the sequential queue until the dependency relationship is eliminated.

For the reordering cache, the vector maximum-minimum operation instruction is cached in the reordering cache while being executed. When execution of a vector maximum-minimum operation instruction is completed, if the vector maximum-minimum operation instruction is also the earliest one among instructions that have not been submitted and are in the reordering cache, the vector maximum-minimum operation instruction will be submitted. Once the vector maximum-minimum operation instruction is submitted, status change of the vector maximum-minimum operation device caused by operations performed by the vector maximum-minimum operation instruction cannot be cancelled.

The vector maximum-minimum operation unit is responsible for all vector maximum-minimum operations of the vector maximum-minimum operation device, and the vector maximum-minimum operation instruction is sent to the vector maximum-minimum operation unit for execution.

The scratchpad memory is a temporary storage device dedicated to vector data, and can support vector data of different sizes.

The I/O direct memory access module is configured to directly access the scratchpad memory and responsible for reading data from or writing data into the scratchpad memory.

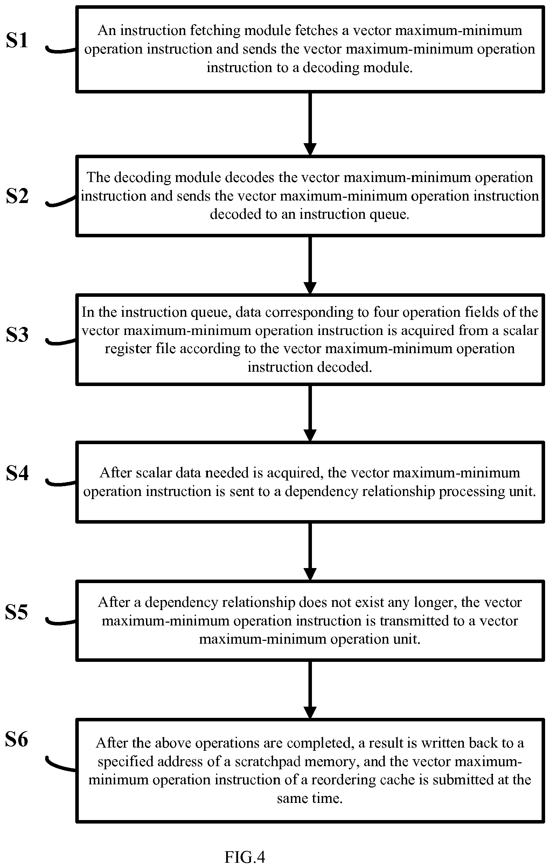

FIG. 4 is a schematic flow diagram illustrating a method for performing a vector maximum-minimum operation instruction through a vector maximum-minimum operation device according to an embodiment of the present disclosure. As illustrated in FIG. 4, a manner of performing the vector maximum-minimum operation instruction is as follows.

At S1, an instruction fetching module fetches the vector maximum-minimum operation instruction, and sends the vector maximum-minimum operation instruction to a decoding module.

At S2, the decoding module decodes the vector maximum-minimum operation instruction, and sends the vector maximum-minimum operation instruction decoded to an instruction queue.

At S3, in the instruction queue, data corresponding to four operation fields of the vector maximum-minimum operation instruction is acquired from a scalar register file according to the vector maximum-minimum operation instruction decoded. In an implementation, the data acquired from the scalar register file includes a start address of a vector *vin*₀*,* a length of the vector *vin*₀*,* a start address of a vector *vin*₁*,* and a length of the vector *vin*₁*.*

At S4, after scalar data needed is acquired, the vector maximum-minimum operation instruction is sent to a dependency relationship processing unit. The dependency relationship processing unit analyzes whether there is a dependency relationship between data of the vector maximum-minimum operation instruction and data of an uncompleted previous vector maximum-minimum operation instruction. The vector maximum-minimum operation instruction needs to wait (in other words, the vector maximum-minimum operation instruction is cached) in a storage queue until there is no dependency relationship between the data of the vector maximum-minimum operation instruction and the data of the uncompleted previous vector maximum-minimum operation instruction.

At S5, after the dependency relationship between the data of the vector maximum-minimum operation instruction and the data of the uncompleted previous vector maximum-minimum operation instruction does not exist any longer, the vector maximum-minimum operation instruction is transmitted to a vector maximum-minimum operation unit. The vector maximum-minimum operation unit retrieves needed vectors from a scratchpad memory according to an address and a length of needed data, and then a vector maximum-minimum operation is performed in the vector maximum-minimum operation unit.

At S6, after the above operations are completed, a result is written back to a specified address of the scratchpad memory, and the vector maximum-minimum operation instruction of a reordering cache is submitted at the same time.

Although the objects, technical solutions and advantageous effects of the present disclosure has been described in detail according to certain embodiments, it should be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A vector maximum-minimum operation device, configured to determine a maximum element or a minimum element of a vector according to a vector maximum operation instruction or a vector minimum operation instruction, respectively,
wherein the vector maximum operation instruction comprises a vector maximum instruction, VMAX, for obtaining the maximum element of the vector, and
wherein the vector minimum operation instruction comprises a vector minimum instruction, VMIN, for obtaining the minimum element of the vector;
the device comprising:
a storage unit, configured to store vectors;
a register unit, configured to store vector addresses, wherein the vector addresses are addresses of the vectors stored in the storage unit; and
a vector maximum-minimum operation unit, configured
to acquire the vector maximum operation instruction or the vector minimum operation instruction,
to acquire a vector address from the register unit according to the vector maximum operation instruction or the vector minimum operation instruction,
to acquire the vector from the storage unit according to the vector address acquired, and
to perform a vector maximum operation or a vector minimum operation on the vector acquired to obtain the maximum element or the minimum element of the vector, respectively;
wherein the vector maximum operation instruction or the vector minimum operation instruction comprises an operation code and at least one operation field;
wherein the operation code is configured to indicate a function of the vector maximum operation instruction or the vector minimum operation instruction; and
wherein the operation field is configured to indicate data information of the vector maximum operation instruction or the vector minimum operation instruction;
wherein the data information comprises a register unit number, and the vector maximum-minimum operation unit is configured to access a register unit and to acquire a vector address according to the register unit number;
wherein a start address and a length of the vector can be obtained from the register unit according to the register unit number for obtaining the vector stored in a corresponding address from the storage unit according to the start address and the length of the vector.

2. The device of claim 1, further comprising:
an instruction cache unit, configured to store vector maximum operation instructions or vector minimum operation instructions to be executed.

3. The device of claim 2, further comprising:
an instruction processing unit, configured
to acquire a vector maximum operation instruction or a vector minimum operation instruction from the instruction cache unit,
to process the vector maximum operation instruction or the vector minimum operation instruction acquired from the instruction cache unit, and
to provide the vector maximum operation instruction or the vector minimum operation instruction processed to the vector maximum-minimum operation unit.

4. The device of claim 3, wherein the instruction processing unit comprises:
an instruction fetching module, configured to acquire the vector maximum operation instruction or the vector minimum operation instruction from the instruction cache unit;
a decoding module, configured to decode the vector maximum operation instruction or the vector minimum operation instruction acquired from the instruction cache unit; and
an instruction queue, configured to sequentially store the vector maximum operation instruction or the vector minimum operation instruction decoded.

5. The device of claim 1, further comprising a dependency relationship processing unit configured to:
determine whether the vector maximum operation instruction or the vector minimum operation instruction accesses the same vector as a previous vector maximum operation instruction or a previous vector minimum operation instruction, before the vector maximum-minimum operation unit acquires the vector maximum operation instruction or the vector minimum operation instruction; and
store the vector maximum operation instruction or the vector minimum operation instruction into a storage queue based on a determination that the vector maximum operation instruction or the vector minimum operation instruction accesses the same vector as the previous vector maximum operation instruction or the previous vector minimum operation instruction, and provide the vector maximum operation instruction or the vector minimum operation instruction in the storage queue for the vector maximum-minimum operation unit after execution of the previous vector maximum operation instruction or the previous vector minimum operation instruction is completed; or
provide the vector maximum operation instruction or the vector minimum operation instruction for the vector maximum-minimum operation unit directly, based on a determination that the vector maximum operation instruction or the vector minimum operation instruction does not access the same vector as the previous vector maximum operation instruction or the previous vector minimum operation instruction.

6. The device of claim 1, wherein the storage unit is further configured to store the maximum element and/or the minimum element of the vector determined,
preferably, the storage unit is a scratchpad memory.

7. The device of claim 6, further comprising:
an input/output I/O unit, configured to store the vectors into the storage unit, or to acquire the maximum element and/or the minimum element of the vector from the storage unit.

8. A vector maximum-minimum operation method, configured to determine a maximum element or a minimum element of a vector according to a vector maximum operation instruction or a vector minimum operation instruction, respectively,
wherein the vector maximum operation instruction comprises a vector maximum instruction, VMAX, for obtaining the maximum element of the vector, and
wherein the vector minimum operation instruction comprises a vector minimum instruction, VMIN, for obtaining the minimum element of the vector;
the method comprising:
S1, storing vectors by using a storage unit;
S2, storing vector addresses by using a register unit; and
S3, by using a maximum-minimum operation unit, acquiring the vector maximum operation instruction or the vector minimum operation instruction, acquiring a vector address according to the vector maximum operation instruction or the vector minimum operation instruction, acquiring the vector according to the vector address acquired, and performing a vector maximum operation or a vector minimum operation on the vector acquired to obtain the maximum element or the minimum element of the vector, respectively;
wherein the vector maximum operation instruction or the vector minimum operation instruction comprises an operation code and at least one operation field;
wherein the operation code is configured to indicate a function of the vector maximum operation instruction or the vector minimum operation instruction, and the operation field is configured to indicate data information of the vector maximum operation instruction or the vector minimum operation instruction;
wherein the data information comprises a register unit number, and the vector maximum-minimum operation unit is configured to access a register unit and to acquire a vector address according to the register unit number;
wherein a start address and a length of the vector can be obtained from the register unit according to the register unit number for obtaining the vector stored in a corresponding address from the storage unit according to the start address and the length of the vector.

9. The method of claim 8, further comprising the follows prior to S3:
storing vector maximum operation instructions or vector minimum operation instructions by using an instruction cache unit.

10. The method of claim 9, further comprising:
acquiring, by using an instruction processing unit, a vector maximum operation instruction or a vector minimum operation instruction from the vector maximum operation instructions or the vector minimum operation instructions stored.

11. The method of claim 10, further comprising:
decoding, by using a decoding module, the vector maximum operation instruction or the vector minimum operation instruction acquired; and
sequentially storing, by using an instruction queue, the vector maximum operation instruction or the vector minimum operation instruction decoded.

12. The method of claim 8, further comprising the follows prior to S3:
determining, by using a dependency relationship processing unit, whether the vector maximum operation instruction or the vector minimum operation instruction accesses the same vector as a previous vector maximum operation instruction or a previous vector minimum operation instruction; and
storing the vector maximum operation instruction or the vector minimum operation instruction into a storage queue based on a determination that the vector maximum operation instruction or the vector minimum operation instruction accesses the same vector as the previous vector maximum operation instruction or the previous vector minimum operation instruction, and advancing to S3 after execution of the previous vector maximum operation instruction or the previous vector minimum operation instruction is completed; or
advancing to S3 directly, based on a determination that the vector maximum operation instruction or the vector minimum operation instruction does not access the same vector as the previous vector maximum operation instruction or the previous vector minimum operation instruction.

13. The method of claim 8, further comprising:
storing the maximum element and/or the minimum element of the vector determined.

14. The method of claim 8, wherein S1 comprises:
storing the vectors into a scratchpad memory.

15. The method of claim 8, further comprising:
storing, by using an input/output I/O unit, the vectors into the storage unit,
or
acquiring the maximum element and/or the minimum element of the vector from the storage unit.

## Patentansprüche

1. Vektor-Maximum-Minimum-Operationsvorrichtung, die dafür konfiguriert ist, ein Maximum-Element oder ein Minimum-Element eines Vektors gemäß einer Vektor-Maximum-Operationsinstruktion bzw. einer Vektor-Minimum-Operationsinstruktion zu bestimmen, wobei die Vektor-Maximum-Operationsinstruktion eine Vektor-Maximum-Instruktion (VMAX) umfasst, um das Maximum-Element des Vektors zu erhalten, und
wobei die Vektor-Minimum-Operationsinstruktion eine Vektor-Minimum-Instruktion (VMIN) umfasst, um das Minimum-Element des Vektors zu erhalten;
wobei die Vorrichtung umfasst:
eine Speichereinheit, die zum Speichern von Vektoren konfiguriert ist;
eine Registereinheit, die zum Speichern von Vektoradressen konfiguriert ist, wobei die Vektoradressen Adressen der in der Speichereinheit gespeicherten Vektoren sind; und
eine Vektor-Maximum-Minimum-Operationseinheit, die dafür konfiguriert ist:
die Vektor-Maximum-Operationsinstruktion oder die Vektor-Minimum-Operationsinstruktion zu erhalten,
eine Vektoradresse aus der Registereinheit gemäß der Vektor-Maximum-Operationsinstruktion oder der Vektor-Minimum-Operationsinstruktion zu erhalten,
den Vektor aus der Speichereinheit gemäß der erfassten Vektoradresse zu erfassen, und
eine Vektor-Maximum-Operation oder eine Vektor-Minimum-Operation an dem erfassten Vektor durchzuführen, um das Maximum-Element bzw. das Minimum-Element des Vektors zu erhalten;
wobei die Vektor-Maximum-Operationsinstruktion oder die Vektor-Minimum-Operationsinstruktion einen Operationscode und mindestens ein Operationsfeld umfasst;
wobei der Operationscode dafür konfiguriert ist, eine Funktion die Vektor-Maximum-Operationsinstruktion oder der Vektor-Minimum-Operationsinstruktion anzugeben; und
wobei das Operationsfeld dafür konfiguriert ist, Dateninformationen der Vektor-Maximum-Operationsinstruktion oder der Vektor-Minimum-Operationsinstruktion anzugeben;
wobei die Dateninformationen eine Registereinheitsnummer umfassen, und die Vektor-Maximum-Minimum-Operationseinheit dafür konfiguriert ist, auf eine Registereinheit zuzugreifen und eine Vektoradresse gemäß der Registereinheitsnummer zu erfassen;
wobei eine Startadresse und eine Länge des Vektors aus der Registereinheit gemäß der Registereinheitsnummer erhalten werden können, um den in einer entsprechenden Adresse gespeicherten Vektor aus der Speichereinheit gemäß der Startadresse und der Länge des Vektors zu erhalten.

2. Vorrichtung nach Anspruch 1, die des Weiteren umfasst:
eine Instruktions-Cache-Einheit, die dafür konfiguriert ist, auszuführende Vektor-Maximum-Operationsinstruktionen oder Vektor-Minimum-Operationsinstruktionen zu speichern.

3. Vorrichtung nach Anspruch 2, die des Weiteren umfasst:
eine Instruktionsverarbeitungseinheit, die dafür konfiguriert ist:
eine Vektor-Maximum-Operationsinstruktion oder eine Vektor-Minimum-Operationsinstruktion aus der Instruktions-Cache-Einheit zu erhalten,
die Vektor-Maximum-Operationsinstruktion oder die Vektor-Minimum-Operationsinstruktion, die aus der Instruktions-Cache-Einheit erhalten wurde, zu verarbeiten, und
die verarbeitete Vektor-Maximum-Operationsinstruktion oder die verarbeitete Vektor-Minimum-Operationsinstruktion an die Vektor-Maximum-Minimum-Operationseinheit zu übermitteln.

4. Vorrichtung nach Anspruch 3, wobei die
Instruktionsverarbeitungseinheit umfasst:
ein Instruktionsabrufmodul, das dafür konfiguriert ist, die Vektor-Maximum-Operationsinstruktion oder die Vektor-Minimum-Operationsinstruktion aus der Instruktions-Cache-Einheit abzurufen;
ein Decodiermodul, das dafür konfiguriert ist, die Vektor-Maximum-Operationsinstruktion oder die Vektor-Minimum-Operationsinstruktion, die aus der Instruktions-Cache-Einheit erfasst wurde, zu decodieren; und
eine Instruktionswarteschlange, die dafür konfiguriert ist, die decodierte Vektor-Maximum-Operationsinstruktion oder die decodierte Vektor-Minimum-Operationsinstruktion sequentiell zu speichern.

5. Vorrichtung nach Anspruch 1, die des Weiteren eine Abhängigkeitsbeziehungs-Verarbeitungseinheit umfasst, die dafür konfiguriert ist:
zu bestimmen, ob die Vektor-Maximum-Operationsinstruktion oder die Vektor-Minimum-Operationsinstruktion auf denselben Vektor zugreift wie eine vorherige Vektor-Maximum-Operationsinstruktion oder eine vorherige Vektor-Minimum-Operationsinstruktion, bevor die Vektor-Maximum-Minimum-Operationseinheit die Vektor-Maximum-Operationsinstruktion oder die Vektor-Minimum-Operationsinstruktion erfasst; und
die Vektor-Maximum-Operationsinstruktion oder die Vektor-Minimum-Operationsinstruktion auf der Grundlage einer Bestimmung, dass die Vektor-Maximum-Operationsinstruktion oder die Vektor-Minimum-Operationsinstruktion auf denselben Vektor zugreift wie die vorherige Vektor-Maximum-Operationsinstruktion oder die vorherige Vektor-Minimum-Operationsinstruktion, in einer Speicherwarteschlange zu speichern und die Vektor-Maximum-Operationsinstruktion oder die Vektor-Minimum-Operationsinstruktion in der Speicherwarteschlange für die Vektor-Maximum-Minimum-Operationseinheit bereitzustellen, nachdem die Ausführung der vorherigen Vektor-Maximum-Operationsinstruktion oder der vorherigen Vektor-Minimum-Operationsinstruktion vollendet ist; oder
die Vektor-Maximum-Operationsinstruktion oder die Vektor-Minimum-Operationsinstruktion auf der Grundlage einer Bestimmung, dass die Vektor-Maximum-Operationsinstruktion oder die Vektor-Minimum-Operationsinstruktion nicht auf denselben Vektor zugreift wie die vorherige Vektor-Maximum-Operationsinstruktion oder die vorherige Vektor-Minimum-Operationsinstruktion, für die Vektor-Maximum-Minimum-Operationseinheit direkt bereitzustellen.

6. Vorrichtung nach Anspruch 1, wobei die Speichereinheit des Weiteren dafür konfiguriert ist, das Maximum-Element und/oder das Minimum-Element des bestimmten Vektors zu speichern,
wobei die Speichereinheit bevorzugt ein Scratchpad-Speicher ist.

7. Vorrichtung nach Anspruch 6, die des Weiteren umfasst:
eine Eingabe/Ausgabe (E/A)-Einheit, die dafür konfiguriert ist, die Vektoren in der Speichereinheit zu speichern oder das Maximum-Element und/oder das Minimum-Element des Vektors aus der Speichereinheit zu erfassen.

8. Vektor-Maximum-Minimum-Operationsverfahren, das dafür konfiguriert ist, ein Maximum-Element oder ein Minimum-Element eines Vektors gemäß einer Vektor-Maximum-Operationsinstruktion bzw. einer Vektor-Minimum-Operationsinstruktion zu bestimmen,
wobei die Vektor-Maximum-Operationsinstruktion eine Vektor-Maximum-Instruktion (VMAX) umfasst, um das Maximum-Element des Vektors zu erhalten, und
wobei die Vektor-Minimum-Operationsinstruktion eine Vektor-Minimum-Instruktion (VMIN) umfasst, um das Minimum-Element des Vektors zu erhalten;
wobei das Verfahren umfasst:
S1, Speichern von Vektoren unter Verwendung einer Speichereinheit;
S2, Speichern von Vektoradressen unter Verwendung einer Registereinheit; und
S3, unter Verwendung einer Maximum-Minimum-Operationseinheit, Erfassen der Vektor-Maximum-Operationsinstruktion oder der Vektor-Minimum-Operationsinstruktion, Erfassen einer Vektoradresse gemäß der Vektor-Maximum-Operationsinstruktion oder der Vektor-Minimum-Operationsinstruktion, Erfassen des Vektors gemäß der erfassten Vektoradresse, und Durchführen einer Vektor-Maximum-Operation oder einer Vektor-Minimum-Operation an dem erfassten Vektor, um das Maximum-Element bzw. das Minimum-Element des Vektors zu erhalten;
wobei die Vektor-Maximum-Operationsinstruktion oder die Vektor-Minimum-Operationsinstruktion einen Operationscode und mindestens ein Operationsfeld umfasst;
wobei der Operationscode dafür konfiguriert ist, eine Funktion der Vektor-Maximum-Operationsinstruktion oder der Vektor-Minimum-Operationsinstruktion anzugeben, und das Operationsfeld dafür konfiguriert ist, Dateninformationen der Vektor-Maximum-Operationsinstruktion oder der Vektor-Minimum-Operationsinstruktion anzugeben;
wobei die Dateninformationen eine Registereinheitsnummer umfassen, und die Vektor-Maximum-Minimum-Operationseinheit dafür konfiguriert ist, auf eine Registereinheit zuzugreifen und eine Vektoradresse gemäß der Registereinheitsnummer zu erfassen;
wobei eine Startadresse und eine Länge des Vektors aus der Registereinheit gemäß der Registereinheitsnummer erhalten werden können, um den in einer entsprechenden Adresse gespeicherten Vektor aus der Speichereinheit gemäß der Startadresse und der Länge des Vektors zu erhalten.

9. Verfahren nach Anspruch 8, das des Weiteren vor S3 Folgendes umfasst:
Speichern von Vektor-Maximum-Operationsinstruktionen oder Vektor-Minimum-Operationsinstruktionen unter Verwendung einer Instruktions-Cache-Einheit.

10. Verfahren nach Anspruch 9, das des Weiteren umfasst:
Erfassen, unter Verwendung einer Instruktionsverarbeitungseinheit, einer Vektor-Maximum-Operationsinstruktion oder einer Vektor-Minimum-Operationsinstruktion aus den gespeicherten Vektor-Maximum-Operationsinstruktionen oder den gespeicherten Vektor-Minimum-Operationsinstruktionen.

11. Verfahren nach Anspruch 10, das des Weiteren umfasst:
Decodieren, unter Verwendung eines Decodiermoduls, der erfassten Vektor-Maximum-Operationsinstruktion oder der erfassten Vektor-Minimum-Operationsinstruktion; und
sequentielles Speichern, unter Verwendung einer Instruktionswarteschlange, der decodierten Vektor-Maximum-Operationsinstruktion oder der decodierten Vektor-Minimum-Operationsinstruktion.

12. Verfahren nach Anspruch 8, das des Weiteren vor S3 Folgendes umfasst:
Bestimmen, unter Verwendung einer Abhängigkeitsbeziehungs-Verarbeitungseinheit, ob die Vektor-Maximum-Operationsinstruktion oder die Vektor-Minimum-Operationsinstruktion auf denselben Vektor zugreift wie eine vorherige Vektor-Maximum-Operationsinstruktion oder eine vorherige Vektor-Minimum-Operationsinstruktion; und
Speichern der Vektor-Maximum-Operationsinstruktion oder der Vektor-Minimum-Operationsinstruktion auf der Grundlage einer Bestimmung, dass die Vektor-Maximum-Operationsinstruktion oder die Vektor-Minimum-Operationsinstruktion auf denselben Vektor zugreift wie die vorherige Vektor-Maximum-Operationsinstruktion oder die vorherige Vektor-Minimum-Operationsinstruktion, in einer Speicherwarteschlange, und Voranschreiten zu S3, nachdem die Ausführung der vorherigen Vektor-Maximum-Operationsinstruktion oder der vorherigen Vektor-Minimum-Operationsinstruktion vollendet ist; oder
direktes Voranschreiten zu S3 auf der Grundlage einer Bestimmung, dass die Vektor-Maximum-Operationsinstruktion oder die Vektor-Minimum-Operationsinstruktion nicht auf denselben Vektor zugreift wie die vorherige Vektor-Maximum-Operationsinstruktion oder die vorherige Vektor-Minimum-Operationsinstruktion.

13. Verfahren nach Anspruch 8, das des Weiteren umfasst:
Speichern des Maximum-Elements und/oder des Minimum-Elements des bestimmten Vektors.

14. Verfahren nach Anspruch 8, wobei S1 umfasst: Speichern der Vektoren in einem Scratchpad-Speicher.

15. Verfahren nach Anspruch 8, das des Weiteren umfasst:
Speichern, unter Verwendung einer Eingabe/Ausgabe (E/A)-Einheit, der Vektoren in der Speichereinheit, oder
Erfassen des Maximum-Elements und/oder des Minimum-Elements aus der Speichereinheit.

## Revendications

1. Dispositif d'opération maximale-minimale de vecteur, configuré pour déterminer un élément maximal ou un élément minimal d'un vecteur en fonction respectivement d'une instruction d'opération maximale de vecteur ou d'une instruction d'opération minimale de vecteur,
dans lequel l'instruction d'opération maximale de vecteur comprend une instruction maximale de vecteur, VMAX, pour obtenir l'élément maximal du vecteur, et
dans lequel l'instruction d'opération minimale de vecteur comprend une instruction minimale de vecteur, VMIN, pour obtenir l'élément minimal du vecteur ;
le dispositif comprenant :
une unité de stockage, configurée pour stocker des vecteurs ;
une unité de registre, configurée pour stocker des adresses de vecteurs, dans lequel les adresses de vecteurs sont des adresses des vecteurs stockés dans l'unité de stockage ; et
une unité d'opération maximale-minimale de vecteur, configurée pour :
acquérir l'instruction d'opération maximale de vecteur ou l'instruction d'opération minimale de vecteur,
acquérir une adresse de vecteur depuis l'unité de registre en fonction de l'instruction d'opération maximale de vecteur ou de l'instruction d'opération minimale de vecteur,
acquérir le vecteur depuis l'unité de stockage en fonction de l'adresse de vecteur acquise, et
réaliser une opération maximale de vecteur ou une opération minimale de vecteur sur le vecteur acquis pour obtenir respectivement l'élément maximal ou l'élément minimal du vecteur ;
dans lequel l'instruction d'opération maximale de vecteur ou l'instruction d'opération minimale de vecteur comprend un code d'opération et au moins un champ d'opération ;
dans lequel le code d'opération est configuré pour indiquer une fonction de l'instruction d'opération maximale de vecteur ou de l'instruction d'opération minimale de vecteur ; et
dans lequel le champ d'opération est configuré pour indiquer des informations de données de l'instruction d'opération maximale de vecteur ou de l'instruction d'opération minimale de vecteur ;
dans lequel les informations de données comprennent un numéro d'unité de registre, et l'unité d'opération maximale-minimale de vecteur est configurée pour accéder à une unité de registre et pour acquérir une adresse de vecteur en fonction du numéro d'unité de registre ;
dans lequel une adresse de début et une longueur du vecteur peuvent être obtenues depuis l'unité de registre en fonction du numéro d'unité de registre pour obtenir le vecteur stocké à une adresse correspondante depuis l'unité de stockage en fonction de l'adresse de début et de la longueur du vecteur.

2. Dispositif selon la revendication 1, comprenant en outre :
une unité de mémoire cache d'instructions, configurée pour stocker des instructions d'opération maximale de vecteur ou des instructions d'opération minimale de vecteur à exécuter.

3. Dispositif selon la revendication 2, comprenant en outre :
une unité de traitement d'instructions, configurée pour acquérir une instruction d'opération maximale de vecteur ou une instruction d'opération minimale de vecteur depuis l'unité de mémoire cache d'instructions,
traiter l'instruction d'opération maximale de vecteur ou l'instruction d'opération minimale de vecteur acquise depuis l'unité de mémoire cache d'instructions, et
fournir l'instruction d'opération maximale de vecteur ou l'instruction d'opération minimale de vecteur traitée à l'unité d'opération maximale-minimale de vecteur.

4. Dispositif selon la revendication 3, dans lequel l'unité de traitement d'instructions comprend :
une unité de récupération d'instructions, configurée pour acquérir l'instruction d'opération maximale de vecteur ou l'instruction d'opération minimale de vecteur depuis l'unité de mémoire cache d'instructions ;
un module de décodage, configuré pour décoder l'instruction d'opération maximale de vecteur ou l'instruction d'opération minimale de vecteur acquise depuis l'unité de mémoire cache d'instructions ; et
une file d'attente d'instructions, configurée pour stocker séquentiellement l'instruction d'opération maximale de vecteur ou l'instruction d'opération minimale de vecteur décodée.

5. Dispositif selon la revendication 1, comprenant en outre une unité de traitement de relation de dépendance configurée pour :
déterminer si l'instruction d'opération maximale de vecteur ou l'instruction d'opération minimale de vecteur accède au même vecteur qu'une instruction d'opération maximale de vecteur précédente ou qu'une instruction d'opération minimale de vecteur précédente, avant que l'unité d'opération maximale-minimale de vecteur n'acquière l'instruction d'opération maximale de vecteur ou l'instruction d'opération minimale de vecteur ; et
stocker l'instruction d'opération maximale de vecteur ou l'instruction d'opération minimale de vecteur dans une file d'attente de stockage sur la base d'une détermination que l'instruction d'opération maximale de vecteur ou l'instruction d'opération minimale de vecteur accède au même vecteur que l'instruction d'opération maximale de vecteur précédente ou l'instruction d'opération minimale de vecteur précédente, et fournir l'instruction d'opération maximale de vecteur ou l'instruction d'opération minimale de vecteur dans la file d'attente de stockage pour l'unité d'opération maximale-minimale de vecteur après qu'une exécution de l'instruction d'opération maximale de vecteur précédente ou l'instruction d'opération minimale de vecteur précédente est terminée ; ou
fournir directement l'instruction d'opération maximale de vecteur ou l'instruction d'opération minimale de vecteur pour l'unité d'opération maximale-minimale de vecteur, sur la base d'une détermination que l'instruction d'opération maximale de vecteur ou l'instruction d'opération minimale de vecteur n'accède pas au même vecteur que l'instruction d'opération maximale de vecteur précédente ou l'instruction d'opération minimale de vecteur précédente.

6. Dispositif selon la revendication 1, dans lequel l'unité de stockage est en outre configurée pour stocker l'élément maximal et/ou l'élément minimal du vecteur déterminé,
de préférence, l'unité de stockage est une mémoire de travail.

7. Dispositif selon la revendication 6, comprenant en outre :
une unité d'entrée/sortie, E/S, configurée pour stocker les vecteurs dans l'unité de stockage, ou pour acquérir l'élément maximal et/ou l'élément minimal du vecteur depuis l'unité de stockage.

8. Procédé d'opération maximale-minimale de vecteur, configuré pour déterminer un élément maximal ou un élément minimal d'un vecteur en fonction respectivement d'une instruction d'opération maximale de vecteur ou d'une instruction d'opération minimale de vecteur,
dans lequel l'instruction d'opération maximale de vecteur comprend une instruction maximale de vecteur, VMAX, pour obtenir l'élément maximal du vecteur, et
dans lequel l'instruction d'opération minimale de vecteur comprend une instruction minimale de vecteur, VMIN, pour obtenir l'élément minimal du vecteur ;
le procédé comprenant :
S1, le stockage de vecteurs en utilisant une unité de stockage ;
S2, le stockage d'adresses de vecteurs en utilisant une unité de registre ; et
S3, en utilisant une unité d'opération maximale-minimale, l'acquisition de l'instruction d'opération maximale de vecteur ou de l'instruction d'opération minimale de vecteur, l'acquisition d'une adresse de vecteur en fonction de l'instruction d'opération maximale de vecteur ou de l'instruction d'opération minimale de vecteur, l'acquisition du vecteur en fonction de l'adresse de vecteur acquise, et la réalisation d'une opération maximale de vecteur ou d'une opération minimale de vecteur sur le vecteur acquis pour obtenir respectivement l'élément maximal ou l'élément minimal du vecteur ;
dans lequel l'instruction d'opération maximale de vecteur ou
l'instruction d'opération minimale de vecteur comprend un code d'opération et au moins un champ d'opération ;
dans lequel le code d'opération est configuré pour indiquer une fonction de l'instruction d'opération maximale de vecteur ou de l'instruction d'opération minimale de vecteur, et le champ d'opération est configuré pour indiquer des informations de données de l'instruction d'opération maximale de vecteur ou de l'instruction d'opération minimale de vecteur ;
dans lequel les informations de données comprennent un numéro d'unité de registre, et l'unité d'opération maximale-minimale de vecteur est configurée pour accéder à une unité de registre et pour acquérir une adresse de vecteur en fonction du numéro d'unité de registre ;
dans lequel une adresse de début et une longueur du vecteur peuvent être obtenues depuis l'unité de registre en fonction du numéro d'unité de registre pour obtenir le vecteur stocké à une adresse correspondante depuis l'unité de stockage en fonction de l'adresse de début et de la longueur du vecteur.

9. Procédé selon la revendication 8, comprenant en outre ce qui suit avant S3 :
le stockage d'instructions d'opération maximale de vecteur ou d'instructions d'opération minimale de vecteur en utilisant une unité de mémoire cache d'instructions.

10. Procédé selon la revendication 9, comprenant en outre :
l'acquisition, en utilisant une unité de traitement d'instructions, d'une instruction d'opération maximale de vecteur ou d'une instruction d'opération minimale de vecteur à partir des instructions d'opération maximale de vecteur ou des instructions d'opération minimale de vecteur stockées.

11. Procédé selon la revendication 10, comprenant en outre :
le décodage, en utilisant un module de décodage, de l'instruction d'opération maximale de vecteur ou de l'instruction d'opération minimale de vecteur acquise ; et
le stockage séquentiellement, en utilisant une file d'attente d'instructions, de l'instruction d'opération maximale de vecteur ou de l'instruction d'opération minimale de vecteur décodée.

12. Procédé selon la revendication 8, comprenant en outre ce qui suit avant S3 :
la détermination, en utilisant une unité de traitement de relation de dépendance, si l'instruction d'opération maximale de vecteur ou l'instruction d'opération minimale de vecteur accède au même vecteur qu'une instruction d'opération maximale de vecteur précédente ou qu'une instruction d'opération minimale de vecteur précédente ; et
le stockage de l'instruction d'opération maximale de vecteur ou de l'instruction d'opération minimale de vecteur dans une file d'attente de stockage sur la base d'une détermination que l'instruction d'opération maximale de vecteur ou l'instruction d'opération minimale de vecteur accède au même vecteur que l'instruction d'opération maximale de vecteur précédente ou l'instruction d'opération minimale de vecteur précédente, et le passage à S3 après qu'une exécution de l'instruction d'opération maximale de vecteur précédente ou de l'instruction d'opération minimale de vecteur précédente est terminée ; ou
le passage directement à S3, sur la base d'une détermination que l'instruction d'opération maximale de vecteur ou l'instruction d'opération minimale de vecteur n'accède pas au même vecteur que l'instruction d'opération maximale de vecteur précédente ou l'instruction d'opération minimale de vecteur précédente.

13. Procédé selon la revendication 8, comprenant en outre :
le stockage de l'élément maximal et/ou de l'élément minimal du vecteur déterminé.

14. Procédé selon la revendication 8, dans lequel S1 comprend :
le stockage des vecteurs dans une mémoire de travail.

15. Procédé selon la revendication 8, comprenant en outre :
le stockage, en utilisant une unité d'entrée/sortie, E/S, des vecteurs dans l'unité de stockage, ou
l'acquisition de l'élément maximal et/ou l'élément minimal du vecteur depuis l'unité de stockage.
